# EUROPEAN PATENT SPECIFICATION

(11) **EP 2 062 450 B1**
(45) Date of publication and mention of the grant of the patent: **18.05.2016**
(21) Application number: 07804223.1
(22) Date of filing: 11.09.2007
(51) Int. Cl.: H04W 4/08, H04W 8/18

(54) **MOBILE COMMUNICATIONS SYSTEM**
MOBILKOMMUNIKATIONSSYSTEM
SYSTÈME DE COMMUNICATION MOBILE

(30) Priority: 11.09.2006 GB 0617861
(43) Date of publication of application: 27.05.2009
(73) Proprietor: Sepura PLC, Cambridge CB4 1GR (GB)
(72) Inventor: VLASSIS, Socrates, Cambridge CB4 1DH (GB); JONES, Richard, Cambridge CB5 9HD (GB)
(74) Representative: Tothill, John Paul
(86) International application number: PCT/GB2007/003426
(87) International publication number: WO 2008/032043

(56) References cited:
- WO-A-03/039173
- WO-A-2006/055227

## Description

The present invention relates to mobile communications systems and in particular, but not exclusively, to the TERRA (TErrestrial Trunked RAdio) system.

In many mobile communications systems, particularly so-called private mobile radio systems such as those used by the emergency services, such as the TETRA system, users can connect to and make calls to so-called call or talk groups, i.e. groups of plural users to which a so-called group call can be made.

Many such mobile communications systems will have predefined talk (call) groups, each containing different sets of users, which a user can switch between and select, for example by using an appropriate input, such as a dial or switch, on their communications terminal. This enables a user to select the talk group that they wish to belong to, e.g. to make calls to and/or receive calls from.

It is also the case that in some mobile communications systems, including the TERRA system, the available talk groups may be arranged as predefined sets or folders of plural talk groups, any one of which sets or folders can then be mapped to the user's talk group selection input, e.g. by the user making an appropriate input to that effect. This allows a user to use and select between more talk groups than, for example, the talk group selection input of the communications terminal may in itself support.

For example, in the case of TETRA systems, talk group folders are used to, for example, sub-divide the available or desired talk groups into, for example, regional or team-based sub-sets.

Document EP 1 569 486 A1, 31.08.2005, discloses a method, system, and device for provisioned talk group identifier discovery.

As discussed above, the selection of a talk group and/or talk group set to use is normally performed by the user making an appropriate input to their communications terminal, such as a key press, voice command, etc..

However, the Applicants have recognised that in some circumstances such techniques for selecting talk groups may be undesirable or inappropriate. For example, a user may wish to be able to change talk groups without being noticed, or the controls for their terminal may not facilitate the straightforward or wide selection of different talk groups.

The Applicants believe therefore that there remains scope for improvements to mobile communications systems that support the use of different talk (call) groups.

According to a first aspect of the present invention, there is provided a method of operating a mobile communications terminal, the method comprising:
transmitting to the communications terminal a command indicating a set of talk groups to use from a plurality of sets of talk groups stored in the terminal; and

the communications terminal, in response to receiving such a command, selecting the indicated set of talk groups for use.

According to a second aspect of the present invention, there is provided a communications terminal for a mobile communications system, comprising:
means for, in response to a command received over an air interface, selecting a set of talk groups for use from a plurality of sets of talk groups stored in the terminal.

In the present invention, a command transmitted to a communications terminal is used to set the set (folder) of talk groups to be used by the terminal. In other words, a transmitted command (e.g., and preferably, sent over an air interface) is used to select which set of talk groups the terminal is to use. This avoids, for example, the local user of the terminal having to set the set of talk groups themselves. This therefore avoids the problems identified by the Applicants and discussed above.

The command can be transmitted to the terminal in any suitable and desired manner. In a preferred embodiment it is transmitted via the terminal's normal radio communications channels (i.e. via the normal communication mode or protocol of the communications system that the terminal is operating in). Thus, in a TETRA communications system, for example, the command is preferably transmitted as a TETRA communication (via a TETRA communications channel. (over the TETRA air interface)). Thus, in a preferred embodiment, the command is transmitted over the air interface (the communications system air interface) of the terminal.

It would also or instead be possible, for example, to transmit the command to the terminal via a short range radio (wireless) connection, such as Bluetooth, and/or via a near-field (wireless) communications protocol, such as via an inductive loop. Thus, in a preferred embodiment the command is transmitted via a short range or near field wireless connection. In a preferred embodiment, both a short range or near field wireless connection and the terminal's "normal" (radio) communications channels can be used to transmit the command. The short range radio connection is preferably a Bluetooth connection, and the near field wireless connection is preferably an inductive loop.

The selected talk group is preferably used for a call or calls made or to be made and/or received by the terminal. In other words, the selected talk group to be used is preferably set as the call (talk) group that the terminal is set to (that the terminal (its user) currently "belongs" to), such that that talk group will be used, e.g., for the next call (and, preferably, all subsequent calls until changed) made and/or received by the terminal. Thus, in a preferred embodiment, the selected talk group is set as the talk group to be used for calls via the terminal.

In a preferred embodiment, the selected talk group is also or instead selected so that it can be modified and/or changed in use. For example, the terminal could be commanded to select the talk group in question and then to modify, e.g., the settings, configuration and/or membership, etc., for that talk group. In this case the selected (and modified) talk group is preferably also (then) set as the talk group to be used for calls via the terminal, but this is not essential, and the terminal could instead remain set to an existing talk group for call purposes, and/or set to a different talk group for call purposes, if desired.

The command transmitted to the terminal could, e.g., contain data to allow the terminal to set up or configure the set of talk groups. In one such arrangement, such data could contain or define a new (i.e. not previously configured) talk group or set of talk groups, which the terminal is then instructed to use.

In the preferred embodiment, the command (data) instructs the terminal to select for use a set of talk groups that is already stored or configured in the terminal. In other words, the transmitted command (e.g., and preferably, sent over an air interface) is preferably used to specify which one or ones of the sets of talk groups that the terminal is already configured with is to be used. In this arrangement, the command accordingly preferably contains data identifying a preconfigured set of talk groups that is already stored in the terminal, and which the terminal is then instructed to use.

This allows, for example, a dispatcher or another user to send a command remotely to the terminal that will instruct the terminal to select, and preferably automatically select, a specific talk group folder from the talk group folders (sets) that (already) exist in the customisation of the terminal receiving the command.

The communications terminal accordingly preferably stores data representing two or more predefined sets of talk groups to be used in the communications system, and preferably stores a plurality of predefined or predetermined talk groups and a plurality of predefined or predetermined sets (folders) of talk groups.

In a preferred embodiment, as discussed above, the command (the data contained in the command) includes data for modifying or changing a talk group and/or set of talk groups already stored in the terminal, e.g. by adding or removing one or more users from a talk group.

The command that is transmitted to the terminal can take any suitable form. It is preferably a short message, preferably a short data message, e.g., and preferably, having an appropriate format and/or identifier. It could, for example, and preferably does, comprise a text message. It could also or instead, for example, and preferably does also or instead, comprise a packet data message (a message that uses, and/or is sent via, a packet data protocol).

In the case of a TETRA system, the command is preferably an SDS message, and/or is preferably a packet data message, preferably having a predefined format. As discussed above, the command is preferably such as to cause the terminal to select a talk group set or folder as if the user was operating the terminal locally.

As discussed above, the command preferably indicates the selection of a, preferably, predetermined or predefined talk group set (folder) to be used.

According to a third aspect of the present invention, there is provided an SDS message or a packet data message for a TETRA mobile communications system comprising a command for instructing a TERRA communications terminal to select a predefined or predetermined set of talk groups (e.g. a talk group folder).

According to an arrangement there is provided a method of operating a TERRA communications system, the method comprising:
transmitting to a terminal of the system an SDS message or a packet data message to instruct the terminal to select a predefined talk group folder.

According to a fourth aspect of the present invention, there is provided a mobile communications system as claimed in claim 13.

In an embodiment, the mobile communications system comprises a TETRA communications system, comprising means for transmitting to a terminal of the system an SDS message and/or a packet data message to instruct the terminal to select a predefined talk group folder.

In a particularly preferred embodiment, the communications terminal will only accept and act upon the transmitted command to set or select a talk group folder if one, or more than one, selected, predefined criteria are met. This helps to enhance the security of the process. The predefined criteria that must be met for accepting the command preferably comprise one or more of, and preferably all of, the following: the command being received from a predefined source (e.g. user), the command being end-to-end encrypted, and/or the communications terminal being in a mode (which, e.g. can be set by the user) that allows the terminal to accept over the air terminal control commands.

In a preferred embodiment, the terminal is arranged to send, preferably automatically, a response (e.g. an acknowledgement) to a talk group set selection command that it receives. Preferably this response can be selectively activated and/or required, e.g., by including an acknowledgement request in the initial message.

In a preferred embodiment, the terminal can be returned to a default talk group/talk group folder selection state. This can preferably be done using a local terminal function (i.e. an input directly to the terminal by, for example, the local user of the terminal) or by a remote user sending an over the air command, and preferably by either of these actions. It would also be possible to, e.g., have the terminal return automatically to a default talk group/talk group folder selection state after a call has been made using the new talk group, if desired.

The arrangement of the present invention can be applied in any desired circumstances and situations. It can be used, for example, for terminals operating both in trunked mode and in direct mode, if desired.

The communications terminal can take any suitable or desired form. It is preferably a mobile terminal (mobile station) of a mobile communications system. The mobile station may, e.g., be portable or, e.g., vehicle mounted, etc., as is known in the art.

The various processes, etc., of the present invention to be carried out in or by the system infrastructure can be performed in any suitable and desired components of the system infrastructure and/or communications terminal.

The communications system of the present invention can be any suitable such system. The present invention is particularly, but not exclusively, applicable to mobile communication systems, such as the TETRA system. Thus the present invention also extends to a communications terminal and to a method of operating a communications terminal of a mobile communications system, and to a mobile communications system and a method of operating a mobile communications system, that is in accordance with and/or that can be operated in accordance with, the present invention. The mobile communications system is preferably a TETRA system and the mobile communications terminal is preferably a TERRA terminal.

As will be appreciated by those skilled in the art, all of the aspects and embodiments of the present invention described herein can and preferably do include, as appropriate, any one or more or all of the preferred and optional features of the invention described herein.

The methods in accordance with the present invention may be implemented at least partially using software e.g. computer programs. It will thus be seen that when viewed from further aspects the present invention provides computer software specifically adapted to carry out the method or a method herein described when installed on data processing means, a computer program element comprising computer software code portions for performing the method or a method herein described when the program element is run on data processing means, and a computer program comprising code means adapted to perform all the steps of a method or of the methods herein described when the program is run on a data-processing system. The invention also extends to a computer software carrier comprising such software which when used to operate a communications system or terminal comprising data processing means causes in conjunction with said data processing means said system or terminal to carry out the steps of the method of the present invention. Such a computer software carrier could be a physical storage medium such as a ROM chip, CD ROM or disk, or could be a signal such as an electronic signal over wires, an optical signal or a radio signal such as to a satellite or the like.

It will further be appreciated that not all steps of the method of the invention need be carried out by computer software and thus from a further broad aspect the present invention provides computer software and such software installed on a computer software carrier for carrying out at least one of the steps of the methods set out herein.

The present invention may accordingly suitably be embodied as a computer program product for use with a computer system. Such an implementation may comprise a series of computer readable instructions either fixed on a tangible medium, such as a computer readable medium, for example, diskette, CD-ROM, ROM, or hard disk, or transmittable to a computer system, via a modem or other interface device, over either a tangible medium, including but not limited to optical or analogue communications lines, or intangibly using wireless techniques, including but not limited to microwave, infrared or other transmission techniques. The series of computer readable instructions embodies all or part of the functionality previously described herein.

Those skilled in the art will appreciate that such computer readable instructions can be written in a number of programming languages for use with many computer architectures or operating systems. Further, such instructions may be stored using any memory technology, present or future, including but not limited to, semiconductor, magnetic, or optical, or transmitted using any communications technology, present or future, including but not limited to optical, infrared, or microwave. It is contemplated that such a computer program product may be distributed as a removable medium with accompanying printed or electronic documentation, for example, shrink-wrapped software, pre-loaded with a computer system, for example, on a system ROM or fixed disk, or distributed from a server or electronic bulletin board over a network, for example, the Internet or World Wide Web.

A number of preferred embodiments of the present invention will now be described by way of example only.

The preferred embodiments of the invention will be described with particular reference to a TETRA mobile communications system. However, as discussed above, while the present invention is particularly applicable to TETRA mobile communications systems, as will be appreciated by those skilled in the art, it is not exclusive to those systems and can be applied to other mobile communications systems and communications systems equally.

An example of an operation where the present invention could be applied is as follows.

A user is urgently called to meet another user to participate in a joint operation. While the user is underway to the meeting point, the dispatcher or an authorised comms operator sends an SDS message to the user's radio to select a particular talk group, thereby configuring it appropriately for use in the joint operation.

When the operation is finished, the dispatcher or authorised comms operator sends another SDS message to set the user's radio back to its original state. This can also be done locally by the user, by activating a reset function that sets the folder/talk group selection to a predefined state.

Some more detailed examples of the types of messages, etc., that may be used in the present invention will now be described below.

The talk group folder selection command is sent in a protocol message (SPP) inside a TETRA SDS message, having the following format. This message is processed as described below if it is received from a predefined address; otherwise it is treated as normal SDS message.

**Table 1: Talk Group Folder Selection Message Format**

| **Field** | **Size (bits)** | **Value** | | |
|---|---|---|---|---|
| SPP Headers | | | | |
| Protocol ID | | 2 | "Talk Group Folder Management" | |
| Message ID | | 0 | Select Folder | |
| Handle | 8 | 0 | reserved | |
| | | 1-255 | response identifier | |
| Response Request Flag | 1 | 0 | (individually addressed messages) | reserved |
| | | 0 | (group addressed messages) | do not send response |
| | | 1 | (all message types) | send response |
| Reserved | 7 | reserved - set to 0000000₂ | | |
| Talk Group Folder Index | 8 | 0-203 | folder index | |
| | | 204-255 | reserved | |

If a Talk Group Folder Selection message command is received from a valid address, the radio sends a response back to the identity from which it received the command, if requested to do so via the Response Request Flag. Individually addressed messages are always requested to send the response.

The Reserved field could be used, e.g., to indicate the maximum time period over which to randomise responses to group addressed SDS messages.

The response message and the radio actions are described below:

**Table 2: Talk Group Folder Selection Response Message Format**

| **Field** | **Size (bits)** | **Value** | |
|---|---|---|---|
| SPP Headers | | | |
| Protocol ID | | 2 | "Talk Group Folder Management" |
| Message ID | | 1 | Select Folder Response |
| Handle | 8 | 0 | reserved |
| | | 1-255 | response identifier |
| Response | 8 | 0 | folder selected |
| | | 1 | invalid command |
| | | 2 | folder does not exist |
| | | 3-255 | reserved |

- If transmissions are inhibited, the command is discarded and no response is sent back.
- If a response is sent, the Handle field of the received Talk Group Folder Selection Command is copied into the Handle field of the response message providing a link between the two messages for the sender.
- If the command was not formatted correctly or contains reserved values, and responses are required, the radio responds with "invalid command" with no change of state.
- If the requested folder is not enabled in the terminal, and responses are required, the radio responds with "folder does not exist" with no change of state.
- If the requested folder is enabled, and responses are required, the radio responds with "folder selected" and selects the requested folder.

The talk group folder selection is followed by an attachment request for the talk group at the folder slot number of the rotary knob position if an RCU (remote control unit) is attached, or that shown on the MCU (motorcycle control unit) display if an MCU is attached.

If:
- no valid group can be requested,
- the RCU rotary knob is in position 0 and is customised to switch the radio off or the MCU display shows 0 - i.e. no there is no selected talk group,
- the terminal is operating as a gateway or repeater, and the RCU rotary knob position or the number shown on the MCU display do not represent a DMO talk group, the selected talk group is not changed. If the RCU is connected, the RCU_ROTARY_KNOB_OUT_OF_STEP_ALERT is sounded.

If the terminal is customised to enable talk group and stack selection from a remote user interface and the RCU rotary knob is in position 0 or the MCU display shows 'u', talk group selection after the over the air folder change is the same as if the folder had been changed from the terminal user interface.

If the terminal was operating as a gateway or a repeater before the talk group folder change occurs, it (preferably) automatically re-establishes itself as a gateway or repeater after the talk group folder change with no change to the TMO (Trunked Mode Operation) or DMO (Direct Mode Operation) talk groups constituting the gateway or repeater. When gateway mode is exited, the TMO group forming the TMO half of the gateway is preferably selected (from the original talk group folder). When the talk group is subsequently changed, the selected talk group folder is the one received in the OTA (over the air) command and talk groups are therefore selected from this folder.

If the folder with the index specified in the inbound command is selected, the radio generates the OTA_FOLDER_SELECTION_ALERT, if enabled, responds with "folder selected" and the radio reflects the folder selection. The radio must re-boot to ensure the folder change is maintained in case of uncontrolled power cycle. This may be removed when the context data is automatically saved during operation. Any other responses indicate no change of state at the terminal.

If a talk group cannot be requested because of restrictions imposed by existing functionality, the terminal will operate according to existing functionality for such cases.

A talk group folder customisation command can also be received as an inbound message. This message is processed as described below, only if received from a predefined address, otherwise it is treated as normal SDS message.

**Table 3: Talk Group Folder Customisation Message Format**

| Field | Size (bits) | Values | | |
|---|---|---|---|---|
| SPP Headers | | | | |
| Protocol ID | | 2 | "Talk Group Folder Management" | |
| Message ID | | 2 | Customise Folder | |
| Handle | 8 | 0 | reserved | |
| | | 1-255 | response identifier | |
| Response Request Flag | 1 | 0 | (individually addressed messages) | reserved |
| | | 0 | (group addressed messages) | do not send response |
| | | 1 | (all message types) | send response |
| Reserved | 7 | reserved - set to 0000000₂ | | |
| Talk Group Folder Index | 8 | 0 | Favourites | |
| | | 1 | Folder 1 | |
| | | 2 | Folder 2 | |
| | | ... | | |
| | | 200 | Folder 200 | |
| | | 201-255 | reserved | |
| Number of Talk Groups in Folder | 8 | 0-75 | Number of "Talk Group Index" fields following. | |
| | | 76-255 | reserved | |
| Talk Group Index, see Note 1 | 11 | 0 | reserved | |
| | | 1-2000 | talk group index | |
| | | 2001-2047 | reserved | |
| Note 1: conditional/repeated as defined by "Number of Talk Groups in Folder" | | | | |

If a Talk Group Folder Customisation message command is received from a valid address, the radio sends a response back to the identity from which it received the command, if requested to do so via the Response Request Flag. Individually addressed messages are always requested to send the response.

The Reserved field could be used, e.g., to indicate the maximum time period over which to randomise responses to group addressed SDS messages.

The response message and the radio actions are described below:

**Table 4: Talk Group Folder Customisation Message Format**

| **Field** | **Size (bits)** | **Value** | |
|---|---|---|---|
| SPP Headers | | | |
| Protocol ID | | 2 | "Talk Group Folder Management" |
| Message ID | | 3 | Customise Folder Response |
| Handle | 8 | 0 | reserved |
| | | 1-255 | response identifier |
| Response | 8 | 0 | folder customised |
| | | 1 | invalid command |
| | | 2 | folder does not exist |
| | | 3 | at least one unknown talk group index |
| | | 4-255 | reserved |

- If transmissions are inhibited, the command is discarded and no response is sent back.
- If a response is sent, the Handle field of the received Talk Group Folder Customisation Command is copied into the Handle field of the response message providing a link between the two messages for the sender.
- If the command was not formatted correctly or contains reserved values or the talk groups are not valid for the always attached folder, and responses are required, the radio responds with "invalid command" with no change of state.
- If the folder to be customised is not enabled in the terminal, and responses are required, the radio responds with "folder does not exist" with no change of state.
- If the command contains at least one talk group index that does not exist, and responses are required, the radio responds with "at least one unknown talk group index" with no change of state.
- If the requested folder to be customised is enabled and all talk groups are valid, and responses are required, the radio responds with "folder customised" and the OTA_FOLDER_CUSTOMISATION_ALERT, if enabled, is generated. The folder is then customised accordingly, replacing the current customisation. The radio must re-boot to ensure the folder change is maintained in case of uncontrolled power cycle. This may be removed when the context data is automatically saved during operation.
   o If the RCU or MCU is connected and if the folder that got customised is the same with the currently selected folder, the terminal requests the talk group at the same unfiltered folder slot number as the currently selected group.
      ▪ With the RCU connected, if no talk group corresponds.to the unfiltered folder slot number of the currently selected talk group, or it is a TMO talk group that has an MNI other than that of the radio's current network, the RCU_ROTARY_KNOB_OUT_OF_STEP_ALERT is generated, if enabled, and no change occurs to the radio. The alert is stopped when the Rotary Knob is moved to a new position and a Talk Group is selected as a result of this action.
      ▪ With the MCU connected, if no talk group corresponds to the unfiltered folder slot number of the currently selected talk group, or it is a TMO talk group that has an MNI other than that of the radio's current network, the current talk group selection is not changed.

If the talk group cannot be requested because of restrictions imposed by existing functionality, the terminal will operate according to existing functionality for such cases.

The OTA (Over-the-Air) messages defined above are intended to be sent to terminals operating in Trunked Mode, Direct Mode, Gateway Mode, and Direct Mode operating through a gateway.

There is no defined restriction in TETRA to prevent SDS messages from being sent group addressed, however, it is preferred that they are sent individually addressed wherever possible to avoid the application layer responses either flooding the system in Trunked Mode, or clashing in Direct Mode.

Sending individually addressed commands ensures that the dispatcher of the OTA folder change/customisation command receives a response from each terminal indicating the success/failure of the operation.

Note that if the gateway is required to action one of these commands, the command must be individually addressed to the gateway.

## Claims

1. A method of operating a mobile communications terminal, the method comprising:
transmitting to the communications terminal a command indicating a set of talk groups to use from a plurality of sets of talk groups stored in the terminal; and
the communications terminal, in response to receiving such a command, selecting the indicated set of talk groups for use.

2. The method of claim 1, wherein the step of transmitting a command to the communications terminal comprises:
transmitting to the communications terminal a short message comprising a command indicating a set of talk groups to use.

3. The method of claim 1 or 2, wherein the communications terminal comprises a terminal for use in a TETRA mobile communications system.

4. The method of any one of the preceding claims, further comprising:
the communications terminal only selecting the set of talk groups indicated in the command if the command meets one or more predefined criteria.

5. The method of any one of the preceding claims, further comprising:
the communications terminal subsequently returning to a default or original talk group and/or set of talk groups.

6. The method of claim 5, wherein the communications terminal returns to a default or original talk group in response to: (i) an input to the terminal by a user; (ii) a command from a remote user; and/or (iii) the completion of a call on the new set of talk groups.

7. The method of any one of the preceding claims, further comprising:
the communications terminal storing data representing two or more predefined or predetermined sets of talk groups.

8. The method of any one of the preceding claims, wherein the command comprises data; (i) for allowing the terminal to set up or configure the indicated set of talk groups; and/or (ii) for allowing the terminal to identify a set of talk groups from predefined or predetermined sets of talk groups stored in the terminal.

9. A communications terminal for a mobile communications system, comprising:
means for, in response to a command received over an air interface, selecting a set of talk groups indicated in the command for use from a plurality of sets of talk groups stored in the terminal.

10. The communications terminal of claim 9, further comprising:
means for determining whether the received command meets one or more predefined criteria;
the communications terminal being arranged to only select the set of talk groups indicated in the command if the command is determined by said means to meet the one or more predefined criteria.

11. The communications terminal of claim 9, or 10, further comprising:
means for returning the communications terminal to a default or original talk group in response to: (i) an input to the terminal by a user; (ii) a command from a remote user; and/or (iii) the completion of a call on the new set of talk groups.

12. The communications terminal of any one of claims 9 to 11, further comprising;
means for storing data representing two or more predefined or predetermined sets of talk groups.

13. A mobile communications system, comprising:
a system infrastructure; and
one or more communications terminals as claimed in any one of claims 9 to 12;
the system infrastructure comprising means for transmitting to a communications terminal a command indicating a set of talk groups to be used by the terminal from a plurality of sets of talk groups stored in the terminal.

14. The mobile communications system of claim 13, wherein the means for transmitting a command to a communications terminal comprises:
means for transmitting a short message to a communications terminal, said short message comprising a command indicating a set of talk groups to be used by the terminal.

15. An SDS message or a packet data message for a TETRA mobile communications system comprising a command for instructing a TETRA communications terminal to select a predefined or predetermined set of talk groups.

16. A computer program element comprising computer software code portions for performing the method of any one of claims 1 to 8 when the program element is run on data processing means.

## Patentansprüche

1. Verfahren zum Betreiben eines mobilen Kommunikationsterminals, das Verfahren umfassend:
Übertragen eines Befehls, der einen Satz von Gesprächsgruppen zum Gebrauch von einer Mehrzahl von Sätzen von Gesprächsgruppen, die in dem Terminal gespeichert sind, anzeigt, an das Kommunikationsterminal; und
das Kommunikationsterminal Auswählen des angezeigten Satzes von Gesprächsgruppen zum Gebrauch als Reaktion auf das Empfangen eines solchen Befehls.

2. Verfahren nach Anspruch 1, wobei der Schritt des Übertragens eines Befehls an das Kommunikationsterminal umfasst:
Übertragen einer kurzen Nachricht, die einen Befehl umfasst, der einen Satz von Gesprächsgruppen zum Gebrauch anzeigt, an das Kommunikationsterminal.

3. Verfahren nach Anspruch 1 oder 2, wobei das Kommunikationsterminal ein Terminal zum Gebrauch in einem TETRA mobilen Kommunikationssystem umfasst.

4. Verfahren nach einem der vorhergehenden Ansprüche, weiterhin umfassend:
das Kommunikationsterminal Auswählen des Satzes von Gesprächsgruppen, die in dem Befehl angezeigt sind, nur wenn der Befehl ein oder mehrere vordefinierte Kriterien erfüllt.

5. Verfahren nach einem der vorhergehenden Ansprüche, weiterhin umfassend:
das Kommunikationsterminal nachfolgend Zurückkehren zu einer standardmäßigen oder ursprünglichen Gesprächsgruppe und/oder Satz von Gesprächsgruppen.

6. Verfahren nach Anspruch 5, wobei das Kommunikationsterminal zu einer standardmäßigen oder ursprünglichen Gesprächsgruppe zurückkehrt als Reaktion auf:
(i) eine Eingabe zu dem Terminal von einem Benutzer;
(ii) einen Befehl von einem entfernten Benutzer; und/oder
(iii) Vollendung eines Gesprächs auf dem neuen Satz von Gesprächsgruppen.

7. Verfahren nach einem der vorhergehenden Ansprüche, weiterhin umfassend:
das Kommunikationsterminal Speichern von Daten, die zwei oder mehr vordefinierte oder vorbestimmte Sätze von Gesprächsgruppen repräsentieren.

8. Verfahren nach einem der vorhergehenden Ansprüche, wobei der Befehl Daten umfasst:
(i) die dem Terminal erlauben, den angezeigten Satz von Gesprächsgruppen einzurichten oder zu konfigurieren; und/oder
(ii) die dem Terminal erlauben, einen Satz von Gesprächsgruppen aus vordefinierten oder vorbestimmten Sätzen von Gesprächsgruppen, die in dem Terminal gespeichert sind, zu identifizieren.

9. Kommunikationsterminal für ein mobiles Kommunikationssystem, umfassend:
Mittel zum Auswählen eines Satzes von Gesprächsgruppen zum Gebrauch aus einer Mehrzahl von Sätzen von Gesprächsgruppen, die in dem Terminal gespeichert sind, als Reaktion auf einen Befehl, der über eine Luftschnittstelle empfangen wird, wobei der Satz von Gesprächsgruppen in dem Befehl angezeigt wird.

10. Kommunikationsterminal nach Anspruch 9, weiterhin umfassend:
Mittel zum Bestimmen, ob der empfangene Befehl ein oder mehrere vordefinierten Kriterien erfüllt;
wobei das Kommunikationsterminal ausgebildet ist, den Satz von Gesprächsgruppen, angezeigt in dem Befehl, nur auszuwählen, wenn das Mittel bestimmt, dass der Befehl die ein oder mehreren vordefinierten Kriterien erfüllt.

11. Kommunikationsterminal nach Anspruch 9 oder 10, weiterhin umfassend:
Mittel zum Zurückführen des Kommunikationsterminals zu einer standardmäßigen oder ursprünglichen Gesprächsgruppe als Reaktion auf:
(i) eine Eingabe zu dem Terminal von einem Benutzer;
(ii) einen Befehl von einem entfernten Benutzer; und/oder
(iii) Vollendung eines Gesprächs auf dem neuen Satz von Gesprächsgruppen.

12. Kommunikationsterminal nach einem der Ansprüche 9 bis 11, weiterhin umfassend:
Mittel zum Speichen von Daten, die zwei oder mehr vordefinierte oder vorbestimmte Sätze von Gesprächsgruppen repräsentieren.

13. Mobiles Kommunikationssystem, umfassend:
eine System-Infrastruktur; und
ein oder mehrere Kommunikationsterminals nach einem der Ansprüche 9 bis 12;
die Systeminfrastruktur umfassend Mittel zum Übertragen eines Befehls, der einen Satz von Gesprächsgruppen zum Gebrauch von einer Mehrzahl von Sätzen von Gesprächsgruppen, die in dem Terminal gespeichert sind, anzeigt, an das Kommunikationsterminal.

14. Mobiles Kommunikationssystem nach Anspruch 13, wobei die Mittel zum Übertragen eines Befehls an ein Kommunikationsterminal umfassen:
Mittel zum Übertragen einer kurzen Nachricht an ein Kommunikationsterminal, wobei die kurze Nachricht einen Befehl umfasst, der einen Satz von Gesprächsgruppen zum Gebrauch durch das Terminal anzeigt.

15. SDS-Nachricht oder Paketdatennachricht für ein TETRA mobiles Kommunikationssystem umfassend einen Befehl zum Anweisen eines TETRA Kommunikationsterminals einen vordefinierten oder vorbestimmten Satz von Gesprächsgruppen auszuwählen.

16. Computerprogrammelement umfassend
Computersoftwarecodeabschnitte zum Ausführen des Verfahrens nach einem der Ansprüche 1 bis 8, wenn das Programmelement auf einer Datenverarbeitungsvorrichtung ausgeführt wird.

## Revendications

1. Procédé de mise en oeuvre d'un terminal de communications mobile, le procédé comprenant :
la transmission au terminal de communications d'un ordre indiquant un ensemble de groupes de conversation à utiliser à partir d'une pluralité d'ensembles de groupes de conversation stockés dans le terminal ; et
le terminal de communications, en réponse à la réception d'un tel ordre, sélectionnant l'ensemble indiqué de groupes de conversation à utiliser.

2. Procédé selon la revendication 1, dans lequel l'étape de transmission d'un ordre au terminal de communications comprend :
la transmission au terminal de communications d'un message court comprenant un ordre indiquant un ensemble de groupes de conversation à utiliser.

3. Procédé selon la revendication 1 ou 2, dans lequel le terminal de communications comprend un terminal à utiliser dans un système de communications mobile TETRA.

4. Procédé selon l'une quelconque des revendications précédentes, comprenant en outre :
le terminal de communications sélectionnant seulement l'ensemble de groupes de conversation indiqué dans l'ordre si l'ordre satisfait à un ou plusieurs critères prédéfinis.

5. Procédé selon l'une quelconque des revendications précédentes, comprenant en outre :
le terminal de communications revenant par la suite à un groupe de conversation par défaut ou original et/ou ensemble de groupes de conversation.

6. Procédé selon la revendication 5, dans lequel le terminal de communications revient à un groupe de conversation par défaut ou original en réponse à : (i) une entrée dans le terminal par un utilisateur ; (ii) un ordre provenant d'un utilisateur distant ; et/ou (iii) l'achèvement d'un appel sur le nouvel ensemble de groupes de conversation.

7. Procédé selon l'une quelconque des revendications précédentes, comprenant en outre :
le terminal de communications stockant des données représentant deux ou plusieurs ensembles prédéfinis ou prédéterminés de groupes de conversation.

8. Procédé selon l'une quelconque des revendications précédentes, dans lequel l'ordre comprend des données ; (i) pour permettre au terminal de paramétrer ou configurer l'ensemble indiqué de groupes de conversation ; et/ou (ii) pour permettre au terminal d'identifier un ensemble de groupes de conversation à partir d'ensembles prédéfinis ou prédéterminés de groupes de conversation stockés dans le terminal.

9. Terminal de communications pour un système de communications mobile, comprenant :
un moyen pour, en réponse à un ordre reçu sur une interface hertzienne, sélectionner un ensemble de groupes de conversation indiqués dans l'ordre à utiliser à partir d'une pluralité d'ensembles de groupes de conversation stockés dans le terminal.

10. Terminal de communications selon la revendication 9, comprenant en outre :
un moyen pour déterminer si l'ordre reçu satisfait à un ou plusieurs critères prédéterminés ;
le terminal de communications étant agencé pour seulement sélectionner l'ensemble de groupes de conversation indiqué dans l'ordre si l'ordre est déterminé par ledit moyen pour satisfaire aux un ou plusieurs critères prédéterminés.

11. Terminal de communications selon la revendication 9, ou 10, comprenant en outre :
un moyen pour ramener le terminal de communications à un groupe de conversation par défaut ou original en réponse à : (i) une entrée dans le terminal par un utilisateur ; (ii) un ordre provenant d'un utilisateur distant ; et/ou (iii) l'achèvement d'un appel sur le nouvel ensemble de groupes de conversation.

12. Terminal de communications selon l'une quelconque des revendications 9 à 11, comprenant en outre :
un moyen pour stocker des données représentant deux ou plusieurs ensembles prédéfinis ou prédéterminés de groupes de conversation.

13. Système de communications mobile, comprenant :
une infrastructure de système ; et
un ou plusieurs terminaux de communications selon l'une quelconque des revendications 9 à 12 ;
l'infrastructure de système comprenant un moyen pour transmettre à un terminal de communications un ordre indiquant un ensemble de groupes de conversation à utiliser par le terminal à partir d'une pluralité d'ensembles de groupes de conversation stockés dans le terminal.

14. Système de communications mobile selon la revendication 13, dans lequel le moyen pour transmettre un ordre à un terminal de communications comprend :
un moyen pour transmettre un message court à un terminal de communications, ledit message court comprenant un ordre indiquant un ensemble de groupes de conversation à utiliser par le terminal.

15. Message SDS ou message de données de paquet pour un système de communications mobile TETRA comprenant un ordre pour ordonner à un terminal de communications TETRA de sélectionner un ensemble prédéfini ou prédéterminé de groupes de conversation.

16. Élément formant programme informatique comprenant des parties de code logiciel informatique pour effectuer le procédé selon l'une quelconque des revendications 1 à 8 lorsque l'élément formant programme est exécuté sur un moyen de traitement de données.
